# EUROPEAN PATENT SPECIFICATION

(11) **EP 0 465 847 B1**
(45) Date of publication and mention of the grant of the patent: **01.10.1997**
(21) Application number: 91109472.0
(22) Date of filing: 10.06.1991
(51) Int. Cl.: G06F 13/16

(54) **Memory access control having commonly shared pipeline structure**
Speicherzugriffssteuerung mit gemeinsam genutzter Pipelinestruktur
Commande d'accès en mémoire avec structure pipeline utilisée en commun

(30) Priority: 11.06.1990 JP 150065/90
(43) Date of publication of application: 15.01.1992
(73) Proprietor: NEC CORPORATION, Tokyo (JP)
(72) Inventor: Yamada, Ikuo, c/o NEC Corporation, Tokyo (JP); Hara, Tadashi, c/o NEC Engineering, Ltd., Tokyo (JP)
(74) Representative: VOSSIUS & PARTNER

(56) References cited:
- US-A- 4 773 041
- PATENT ABSTRACTS OF JAPAN vol. 10, no. 154 (P-463) 4 June 1986 & JP-A-61 006 746
- PATENT ABSTRACTS OF JAPAN vol. 6, no. 262 (P-164) 21 December 1982 & JP-A-57 157 365

## Description

The present invention relates generally to memory access controllers for controlling access to a main memory from request sources such as processors and input/output device, and more specifically to a partial-write technique for accessing a main memory from multiple request sources.

Partial-write technique is a mode of memory access control involving three successive phases, namely, the "read" phase in which data is retrieved from a main memory, the "merge" phase in which store data from a request source is merged with the retrieved data so that the latter is partially overwritten with the former, and the "write" phase in which the merged data is stored back into the main memory. In contrast with partia!-write mode, other modes of memory access, i.e., "read" and "full-write" modes involve only a single phase. Because of the different access timing control between the read or full-write mode and the partial-write mode, current pipelined memory access controllers employ two pipelines for independent processing of the respective modes at the cost of an increase in hardware.

JP-A-61-006 746 discloses a partial write control system with a register for holding partial-write data in order to reduce the number of stages of the full-write pipeline. JP-A-57-157 365 discloses a reset address pipeline in addition to the normal pipeline. Simultaneous operation of the two pipelines to invoke an instruction cycle results in high-speed execution.

It is therefore an object of the present invention to provide a memory access controller having a reduced pipeline structure.

This object is obtained by a shared use of a common pipeline structure by different memory access modes. In particular, the object is solved with the features of the claims.

According to the present invention, there is provided a memory access controller for controlling access to a main memory from multiple request sources such as data processors and input/output device. Request data is generated and supplied to the memory access controller in response to a request from each source, the request data specifying a mode of access to the main memory. Store data is also supplied to the memory access controller during full-write or partial-write mode and stored into a source data register as well as into a buffer. A busy check is made on storage locations of the main memory identified by the request data to determine the accessibility. If more than one request exists for accessible locations, request data of highest priority is selected and applied to a first pipeline for periodically shifting it from one register stage to the next. A second pipeline is connected to the output register stage of the first pipeline if request data at that output stage is indicative of the partial-write mode. A first controller receives request data from the input stage of the first pipeline to access the main memory to read data therefrom if the request data indicates either the read or partial-write mode or write data thereinto if it indicates the full-write mode. The first controller further receives request data from the input stage of the second pipeline and accesses the main memory in a write mode if the request data is indicative of the partial-write mode. Data read out of the main memory is stored into an input data register. A merge circuit is associated with the buffer and the input data register. A second controller is connected to all register stages of the first and second pipelines to examine request data therefrom to cause the input data register to supply its output to the request source if request data appearing at the output stage of the first pipeline is indicative of the read mode, and cause the source data register to supply its output to the main memory if request data appearing at the output stage of the first pipeline is indicative of the full-write mode. If request data appearing at the output stage of the first pipeline is indicative of the partial-write mode, data from the buffer and the input data register are merged and the second pipeline is then enabled to start periodically shifting request data along its stages. When this request data appears at the output stage of the second pipeline, the merged data is supplied to the main memory.

Since the first pipeline is commonly shared by all modes of memory access, the memory access controller can be implemented at a reduced hardware cost.

The present invention will be described in further detail with reference to the accompanying drawings, in which:
Fig. I is a block diagram of a memory access controller according to the present invention;
Fig. 2 is a view showing the data structure of request data;
Fig. 3 is a block diagram showing details of the pipeline of Fig. 1;
Figs. 4A, 4B and 4C are timing diagrams useful for describing the operation of the controller during read, full-write and partial-write modes, respectively; and
Fig. 5 is a block diagram of a preferred form of the pipeline.

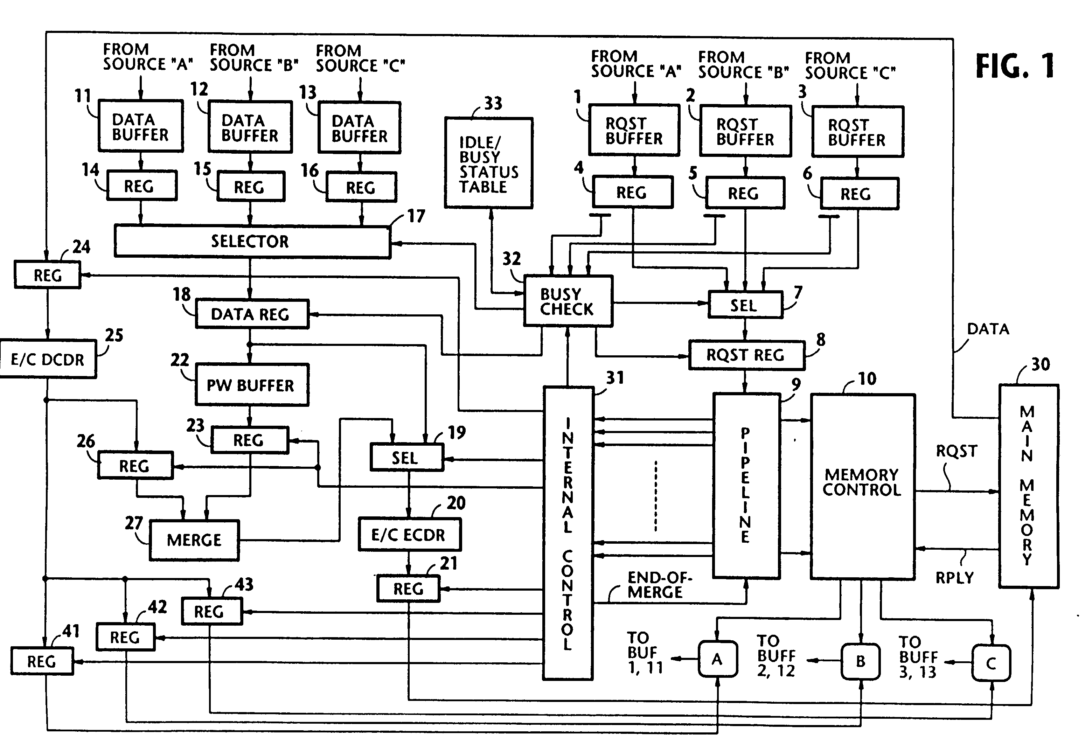

Referring now to Fig. 1, there is shown a memory access controller for a multiprocessor system according to the present invention. The memory access controller is associated with a plurality of request sources designated A, B and C, such as data processors and an I/O (input/output) device. Each request source generates a read request a full-write request or a partial-write request and further generates "store" data when full-write or partial-write modes is requested. Request sources A, B and C are respectively coupled to associated request buffers 1, 2 and 3 and further coupled to associated data buffers 11, 12 and 13.

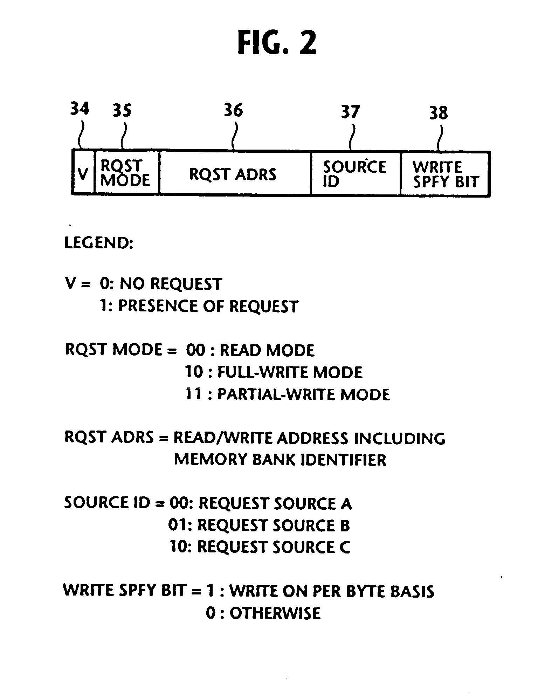

The request data comprises a 2-bit request mode identifier, a 6-bit address (including a memory bank identifier and a read/write address), a 2-bit source identifier and a 1-bit write specify bit As shown in Fig. 2, each of the request registers 4, 5 and 6 has a 1-bit validity (V) field 34 in which a 1 is stored to indicate the presence of a request or a 0 indicating the absence of request The request mode identifier is stored in a two-bit request mode identifier field 35, with "00", "10" and "11" respectively indicating "read", "full-write" and "partial-write" modes. The 6-bit address code is stored in a 6-bit address field 36 adjacent the request mode identifier field 35. The memory bank identifier of the address code specifies a storage location of the main memory 30 into which new data is to be stored or out of which requested data is to be read. The idle/busy status of all memory banks are stored in an idle/busy status table 33. The 2-bit source identifier of the request is stored into a source identifier field 37, with "00", "01" and "10" indicating request sources A, B and C, respectively. The 1-bit write specify bit is stored in a write specification field 38, with a 1 specifying that data is to be stored on a per byte basis and a 0 indicating that there is no data to be stored.

Returning to Fig. 1, request data from each request source is received by the associated request buffer and fed into an associated one of request registers 4, 5 and 6. The request mode identifier field 35, address field 36 and source identifier field 37 of request registers 4, 5 and 6 are coupled to a busy check circuit 32 to determine if the storage location of the request is accessible or busy by examining an idle/busy status table 33. If there is more than one access request to a given accessible storage location, busy check circuit 32 selects one of the request sources according to priority predetermined by the identifiers of the requesting sources and supplies a signal to a request selector 7 and a data selector 17, and applies a set-to-busy signal to idle/busy status table 33 to set the requested storage location to busy state.

All fields of request registers 4, 5 and 6 are, on the other hand, coupled to respective inputs of request selector 7. In response to the control signal from busy check circuit 32, the selected request data is applied to a request register 8 whose output is connected to a request pipeline 9.

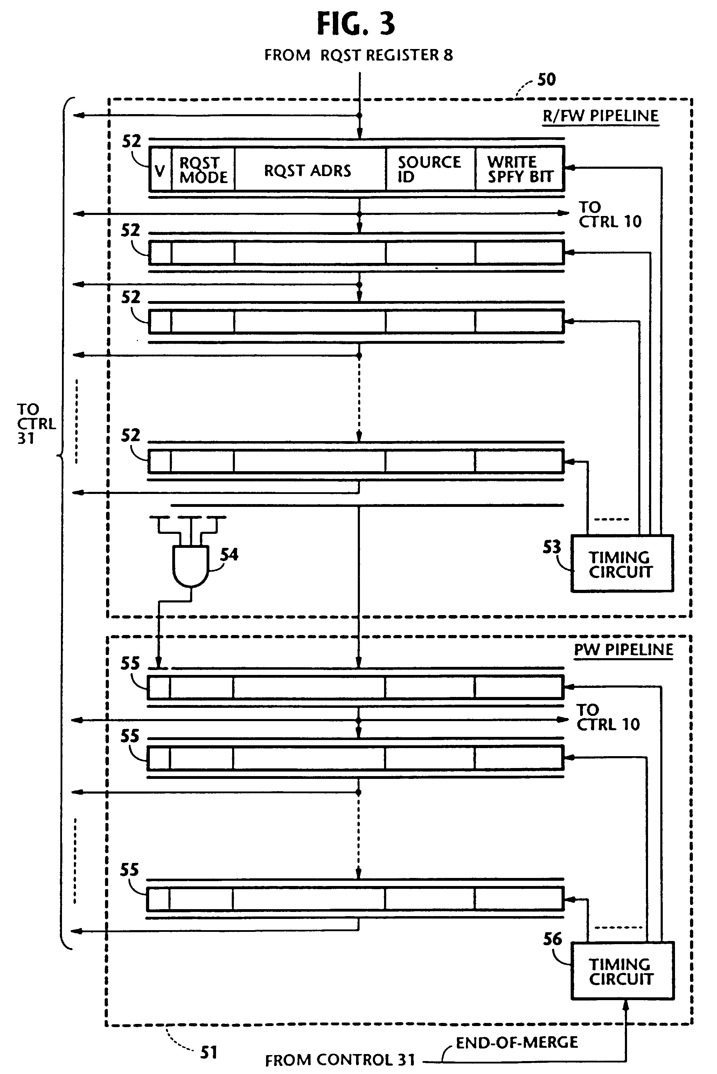

As shown in Fig. 3, request pipeline 9 comprises a read/full-write (R/FW) pipeline 50 and a partial-write (PW) pipeline 51. R/FW pipeline 50 comprises a series of register stages 52 to receive request data from selector 7, and PW pipeline 51 likewise comprises a series of register stages 55 to receive request data from R/FW pipeline 50 if the request is partial-write mode. All registers 52 are driven by a timing circuit 53 to shift each request data from one register to the next at periodic intervals, and similarly all registers 55 are driven by a timing circuit 56. The time taken for each request data to travel through each of the pipelines 50 and 51 corresponds to the time taken for a memory controller 10 to access the main memory 30. The V-bit and request mode fields of the register 52 at the output stage of R/FW pipeline 50 are connected to an AND gate 54 whose output is, in turn, connected to the V-bit field of the input stage register 55 of PW pipeline 51. If partial-write request data arrives at the output stage of R/FW pipeline 50, the inputs of AND gate 54 become all "1"s, and it sets a 1 into the V-bit field of input stage register 55 of PW pipeline 51. When this occurs, all fields of the partial-write request data except for the V bit are loaded into the input stage of PW pipeline 51.

Returning to Fig. 1, all outputs of registers 52 and 55 of pipeline 9 are coupled to an internal controller 31 to allow it to keep track of all request data propagating through pipeline 9 by examining their memory bank identifiers and request modes to generate appropriate timing signals. Memory controller 10 receives request data from the input stages of pipelines 50 and 51 to generate a read or write request signal and applies it to main memory 30 together with the address contained in the request data.

In response to a full-write or partial-write request, store data is generated by the request source and supplied to the associated data buffer and fed into an associated one of registers 14, 15 and 16 whose outputs are coupled to data selector 17. In response to the control signal from busy check circuit 32 the store data of the selected request source is detected and applied to a data register 18 whose output is coupled to a selector 19 and a partial-write buffer 22. Selector 19 is coupled to an error correcting encoder 20 in which the selected store data is encoded into error-correctable form and applied to an output register 21 connected to main memory 30. A merge register 23 is coupled to the output of partial-write buffer 22 to receive waiting store data therefrom and supplies it to a merge circuit 27.

Main memory 30 responds to a read request signal from memory controller 10 by retrieving stored data from a specified location into an input register 24 and responds to a write request signal by returning reply data to memory controller 10 and thence to the request source if access is successfully completed. If access is not successful, error reply data is returned from main memory 30 to memory controller 10 and the request source is notified of this fact. The data stored into the input register 24 is applied to an error correcting decoder 25 to be examined for the presence of error bits. If an error is detected, it is corrected and error-free data is fed into a merge register 26. For partial-write requests, the output of merge register 26 is merged with the output of merge register 23 by the merge circuit 27 and supplied to selector 19 so that the data retrieved from the main memory is partially overwritten with the store data from the request source. The partially overwritten data is supplied through selector 19 and error correcting encoder 20 to the output register 21, and then stored back into main memory 30. The output of error correcting decoder 25 is also connected to output registers 41, 42 and 43 which are respectively connected to request sources A, B and C.

Internal controller 31 supplies timing signals to the various registers and supplies a select command signal to selector 19. It further supplies a reset-to-idle signal to busy check circuit 32 at the end of a request mode and an end-of-merge signal to pipeline 9 during a partial-write mode.

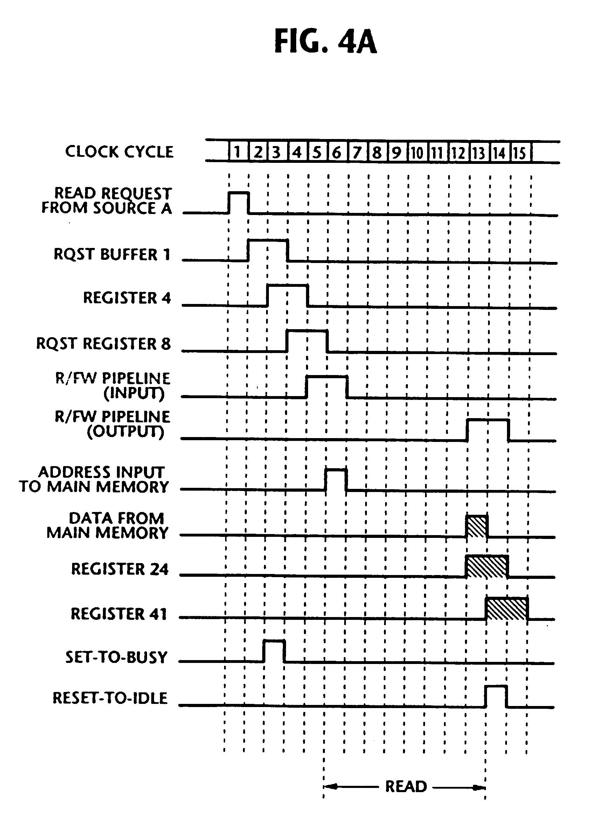

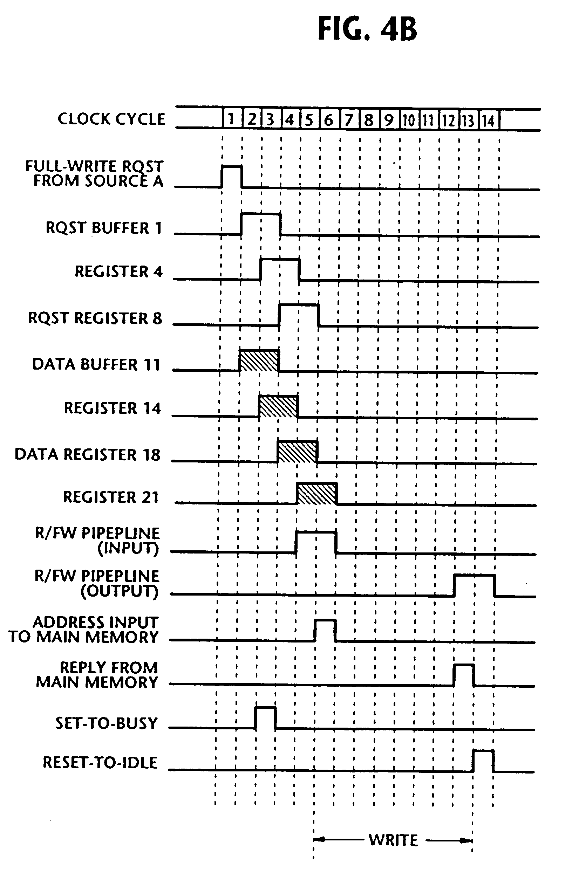

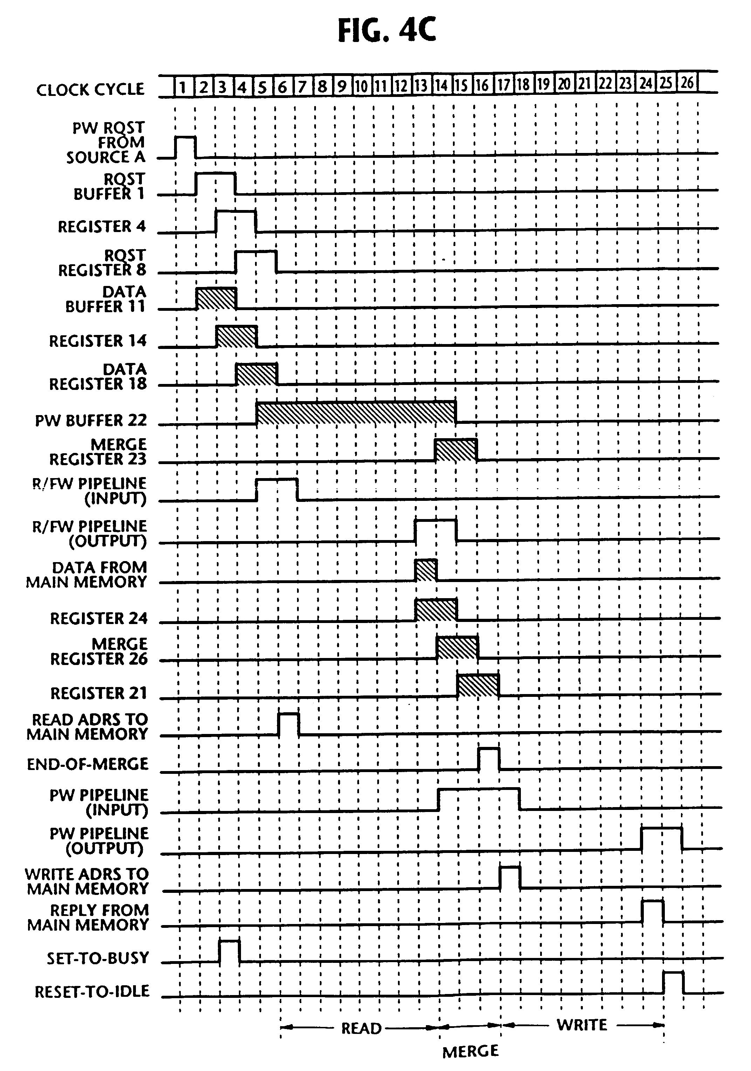

The operation of the memory access controller of this invention will now be described with reference to Figs. 4A, 4B and 4C. Assume that a request source A is selected for each request mode and the access time of the main memory corresponds to eight clock cycles.

During a read mode (Fig. 4A), read request data from request source A is generated in the 1st clock interval and stored into the request buffer 1 in the 2nd clock interval. The request data is transferred from register 1 to register 4 during the 3rd clock interval and the busy check circuit 32 provides a busy check and supplies a set-to-busy signal to idle/busy status table 33 to set the requested storage location to busy state. During the 4th clock interval, busy check circuit 32 supplies a command signal to selector 7 and a timing signal to register 4 to transfer the read request data from register 4 to register 8. The data stored in register 8 is fed into the input stage of R/FW pipeline 50 in the 5th clock interval. During the 6th clock interval, the read request data appears at the output of the input stage of R/FW pipeline 50 and is supplied to memory controller 10. A read request signal is therefore supplied from memory controller 10 to main memory 30, which attempts to retrieve data from a location specified by the address contained in the request signal and delivers it to the input register 24.

In the 13th clock interval the addressed data is retrieved from the main memory and fed into the input register 24. During the next clock interval, the request data appears at the output stage of R/FW pipeline 50. Internal controller 31 receives this data to examine its contents and recognizes that request data has been loaded into register 24 and supplies a timing signal to it to deliver its output to error correcting decoder 25 in which it is error-corrected and stored into register 41. During this 14th clock interval, controller 31 further applies a reset-to-idle signal to busy check circuit 32. During the 15th clock interval, internal controller 31 supplies a timing signal to output register 41 to deliver its output to request source A.

During a full-write mode (Fig. 4B), full-write request data and associated store data are generated by request source A in the 1st clock interval and stored into buffers 1 and 11, respectively, in the 2nd clock interval. During the 3rd clock interval the outputs of registers 1 and 11 are transferred to registers 4 and 14, respectively, and the busy check circuit 32 provides a busy check and supplies a set-to-busy signal to idle/busy status table 33 to set the requested storage location to busy state. In the 4th clock interval, busy check circuit 32 supplies a command signal to selectors 7 and 17 and a timing signal to registers 4 and 14 to deliver their outputs to registers 8 and 18, respectively. During the 5th clock interval, busy check circuit 32 supplies a timing signal to registers 8 and 18 to deliver the output of register 8 to the input stage of R/FW pipeline 50 and the output of register 18 to register 21 via selector 19 and error correcting encoder 20. During the 6th clock interval, memory controller 10 receives the request data from the output of the input stage of R/FW pipeline 50 and supplies a write request signal to main memory 30. At the same time, internal controller 31 receives the same request data and supplies a timing signal to register 21 to deliver the store data to the main memory.

During the 13th clock interval, reply data is returned from the main memory to memory controller 10 and in the 14th clock interval the request data appears at the output stage of R/FW pipeline 50. Internal controller 31 examines this request data and supplies a reset-to-idle signal to busy check circuit 32 to restore the status of the addressed storage location.

Although the output of data register 18 is stored into buffer 22, it is simply discarded since merge register 23 is not activated during the full-write mode.

During a partial-write mode (Fig. 4C), partial-write request data and associated store data from request source A are generated in the 1st clock interval and stored into buffers 1 and 11, respectively, in the 2nd clock interval. During the 3rd clock interval the outputs of registers 1 and 11 are transferred to registers 4 and 14, respectively, and the busy check circuit 32 provides a busy check and supplies a set-to-busy signal to idle/busy status table 33 to set the requested storage location to busy state in the same manner as in the full-write mode. In the 4th clock interval, busy check circuit 32 supplies a command signal to selectors 7 and 17 and a timing signal to registers 4 and 14 to deliver their outputs to registers 8 and 18, respectively. In the 5th clock interval, busy check circuit 32 supplies a timing signal to registers 8 and 18 to respectively deliver their outputs to R/FW pipeline 50 and buffer 22. In the 6th clock cycle, the request data is supplied from R/FW pipeline 50 to memory controller 10 and a read address signal is supplied from controller 10 to the main memory. Data stored in the location specified by the address contained in the read address is retrieved from memory 30 and stored into register 24 during the 13th clock interval.

During the 14th clock interval, the partial-write request data appears at the output stage of R/FW pipeline 50 and internal controller 31 examines its contents to recognize that data from memory 30 has been stored in register 24 and applies a timing signal to it to deliver its output to merge register 26 via error correcting decoder 25 and further applies a timing signal to merge register 23 to receive the waiting store data from buffer 22. Concurrently, the inputs to AND gate 54 of R/FW pipeline 50 become all "1"s, and the partial-write request data is transferred from R/FW pipeline 50 to the input stage of PW pipeline 51. During the 15th clock interval, controller 31 supplies a timing signal to the merge registers 23 and 26 to deliver their outputs to the merge circuit 27. The data from main memory 30 is partially overwritten with the store data from the request source and stored into register 21. During the 16th clock interval, controller 31 supplies an end-of-merge signal to the timing circuit 56 of PW pipeline 51 to cause it to start shifting the request data along registers 55. In the 17th clock interval, the partial-write request data appears at the output of the input stage of PW pipeline 51 and memory controller 10 responds to it by supplying a write request signal to the main memory.

During the 24th clock interval, the main memory returns a reply to memory controller 10 and thence to the request source A. During the 25th clock interval, the partial-write request appears at the output stage of PW pipeline 51 and controller 31 recognizes that a write operation is complete and supplies a reset-to-idle signal to busy check circuit 32 to restore the status of the addressed location. In this way, the partially overwritten data is stored back into the main memory 30, replacing the old data.

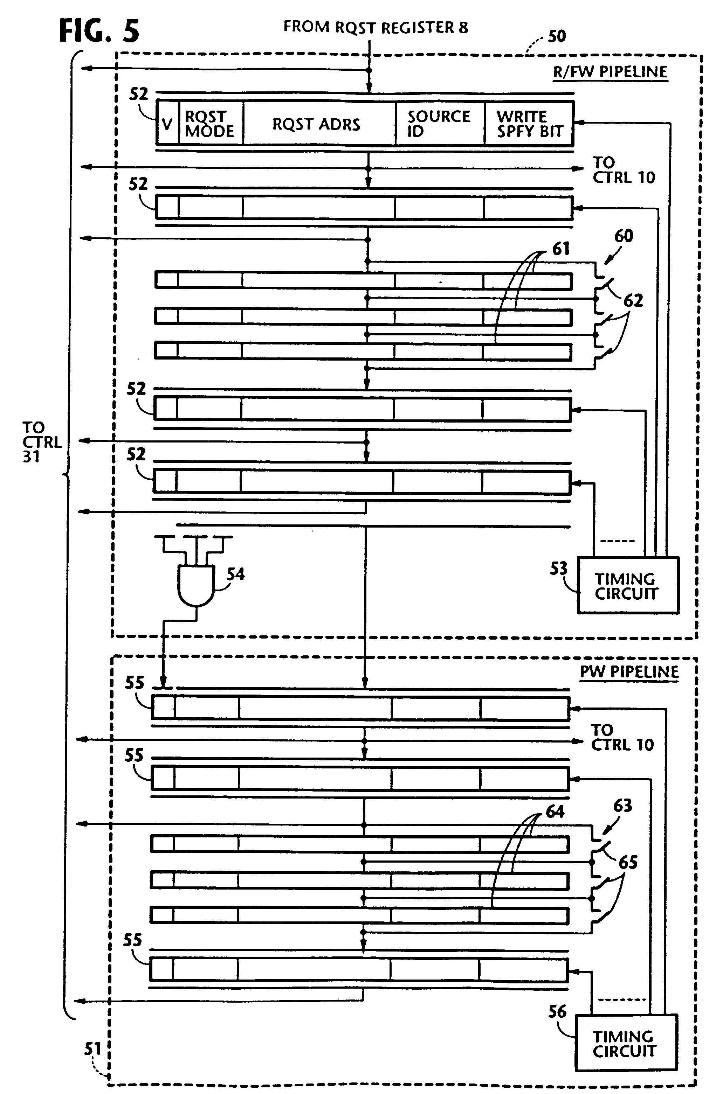

Fig. 5 shows a preferred form of the pipeline 9. In this modification, R/FW pipeline 50 is provided with a switchable register set 60 comprising series-connected registers 61 and switches 62 respectively connected across registers 61. These switches are manually operated to selectively connect the additional register stages to the pipeline 50 so that the time taken for request data to travel from the input stage to the output stage of pipeline 50 corresponds to the memory access time of a user's particular multiprocessor system. In like manner, PW pipeline 51 is provided with a switchable register set 63 comprising series-connected registers 64 and manually operated switches 65 connected across registers 64.

The foregoing description shows only preferred embodiments of the present invention. Various modifications are apparent to those skilled in the art without departing from the scope of the present invention which is only limited by the appended claims.

## Claims

1. A memory access controller for controlling access from a selected request source or request sources to a main memory, comprising:
request data register means (4∼8) for receiving request data from the selected request source, the request data indicating an access mode of the main memory, the access mode including a read mode, a full-write mode and a partial-write mode;
source data register means (14∼21) for receiving store data associated with the request data;
pipeline means (9) comprising a first pipeline (50) having a series of stages for periodically shifting request data from the request data register means (4∼8) along the stages, and a second pipeline (51) having a series of stages connected to an output stage of the first pipeline if request data at said output stage is indicative of the partial-write mode;
first control means (10) for receiving request data from an input stage of the first pipeline (50) and accessing the main memory in a read mode if the received request data is indicative of the read mode or partial-write mode or accessing the memory in a write mode if the received request data is indicative of the full-write mode, and for receiving request data from the input stage of the second pipeline (51) and accessing the main memory in a write mode if the received request data is indicative of the partial-write mode;
input data register means (24, 25) for receiving data read out of the main memory;
buffer means (22) for maintaining store data associated with the selected request data if same is indicative of the partial-write mode;
merge means (23, 26, 19∼21) coupled to the buffer means (22) and the input data register means (24, 25); and
second control means (31) for examining request data from all stages of the first and second pipelines, causing the input data register means (24, 25) to supply the data therein to the selected request source when request data appearing at the output stage of the first pipeline (50) is indicative of the read mode, causing the source data register means (14∼21) to supply the data therein to the main memory when request data appearing at the output stage of the first pipeline (50) is indicative of the full-write mode, causing the merge means (23, 26, 19∼21) to merge data from the buffer means (22) and data from the input data register means (24, 25) when request data appearing at the output stage of the first pipeline (50) is indicative of the partial-write mode, causing the second pipeline (51) to periodically shift request data along the stages thereof when data are merged by the merge means, and causing the merged data to be supplied to the main memory when request data appearing at an output stage of the second pipeline (51) is indicative of the partial-write mode.

2. A memory access controller as claimed in claim 1, wherein each of said first and second pipelines includes one or more additional stages and switch means for selectively coupling the additional stages to the pipeline.

3. A memory access controller as claimed in claim 1 or 2, wherein the request data includes a source identifier identifying the selected request source.

4. A memory access controller as claimed in claim 1, 2, or 3, wherein said source data register means includes an error correcting encoder and said input data register means includes an error correcting decoder.

5. A memory access controller as claimed in any of claims 1 to 4, comprising:
selection means (32, 33, 7, 17) for making a busy check on storage locations of the main memory identified by the received request data and selecting one of the request data and the store data associated therewith according to priority of the request sources if the storage locations are accessible;
wherein the first pipeline (50) has a series of stages connected to the selection means for periodically shifting request data from the selection means along the stages.

6. A method of operating a multiprocessor system comprising a main memory and a first pipeline (50) having a series of stages for periodically shifting request data along the stages thereof, and a second pipeline (51) having a series of stages for periodically shifting request data along the stages thereof, said method comprising the steps of:
a) receiving request data and store data associated therewith from a selected request source, the request data indicating an access mode of the main memory, the access mode including a read mode, a full-write mode and a partial-write mode;
b) applying the request data to the first pipeline (50) and accessing the main memory in a read mode if the request data is indicative of the read mode or partial-write mode, or accessing the main memory in a write mode if the request data is indicative of the full-write mode;
c) applying the request data from the first pipeline (50) to the second pipeline (51) if the request data in an output stage of the first pipeline is indicative of the partial-write mode and accessing the main memory in a write mode;
d) maintaining the store data if the associated request data is indicative of the partial-write mode;
e) examining request data from all stages of the first and second pipelines;
f) if request data appearing at the output stage of the first pipeline (50) is indicative of the read mode, supplying data read out of the main memory (30) to the selected request source;
g) if request data appearing at the output stage of the first pipeline (50) is indicative of the full-write mode, supplying the store data received by the step (a) to the main memory (30);
h) if request data appearing at the output stage of the first pipeline (50) is indicative of the partial-write mode, merging data read out of the main memory with the data maintained by the step (d) and causing the second pipeline (51) to periodically shift request data along the stages thereof; and
i) if request data appearing at an output stage of the second pipeline (51) is indicative of the partial-write mode, supplying the data merged by the step (h) to the main memory.

7. The method of claim 6, comprising the steps of:
a) making a busy check on storage locations of the main memory identified by the received request data and selecting one of the request data and the store data associated therewith according to priority of the request sources if the storage locations are accessible;
b) maintaining the store data selected by the step (a) if the associated request data is indicative of the partial-write mode;
c) if request data appearing at the output stage of the first pipeline is indicative of the full-write mode, supplying the data selected by the step (a) to the main memory;
d) if request data appearing at the output stage of the first pipeline is indicative of the partial-write mode, merging data read out of the main memory with the data maintained by the step (b) and causing the second pipeline (51) to periodically shift request data along the stages thereof.

## Patentansprüche

1. Speicherzugriffscontroller zum Steuern des Zugriffs von einer gewählten Anforderungsquelle oder gewählten Anforderungsquellen auf einen Hauptspeicher, mit:
Anforderungsdatenregistereinrichtungen (4-8) zum Empfangen von Anforderungsdaten von der gewählten Anforderungsquelle, wobei die Anforderungsdaten einen Zugriffsmodus des Hauptspeichers anzeigen, wobei der Zugriffsmodus einen Lesemodus, einen Vollschreibmodus und einen Teilschreibmodus aufweist;
Quelldatenregistereinrichtungen (14-21) zum Empfangen von Speicherdaten, die den Anforderungsdaten zugeordnet sind;
einer Pipelineeinrichtung (9) mit einer ersten Pipeline (50) mit einer Serie von Stufen zum periodischen Verschieben von Anforderungsdaten aus den Anforderungsdatenregistereinrichtungen (4-8) durch die Stufen und mit einer zweiten Pipeline (51) mit einer Serie von Stufen, die mit einer Ausgangsstufe der ersten Pipeline verbunden sind, wenn Anforderungsdaten in der Ausgangsstufe den Teilschreibmodus anzeigen;
einer ersten Steuereinrichtung (10) zum Empfangen von Anforderungsdaten aus einer Eingangsstufe der ersten Pipeline (50) und zum Zugreifen auf den Hauptspeicher in einem Lesemodus, wenn die empfangenen Anforderungsdaten den Lesemodus oder den Teilschreibmodus anzeigen, oder zum Zugreifen auf den Speicher in einem Schreibmodus, wenn die empfangenen Anforderungsdaten den Vollschreibmodus anzeigen, oder zum Empfangen von Anforderungsdaten aus der Eingangsstufe der zweiten Pipeline (51) und zum Zugreifen auf den Hauptspeicher in einem Schreibmodus, wenn die empfangenen Anforderungsdaten den Teilschreibmodus anzeigen;
Eingangsdatenregistereinrichtungen (24, 25) zum Empfangen von Daten, die aus dem Hauptspeicher gelesen werden;
einer Puffereinrichtung (22) zum Halten von Speicherdaten, die den gewählten Anforderungsdaten zugeordnet sind, wenn dieselben den Teilschreibmodus anzeigen;
Mischeinrichtungen (23, 26, 19-21), die mit der Puffereinrichtung (22) und den Eingangsdatenregistereinrichtungen (24, 25) gekoppelt sind; und
einer zweiten Steuereinrichtung (31) zum Prüfen von Anforderungsdaten von allen Stufen der ersten und der zweiten Pipeline, um zu bewirken, daß die Eingangsdatenregistereinrichtungen (24, 25) die dortigen Daten an die gewählte Anforderungsquelle übergeben, wenn Anforderungsdaten, die in der Ausgangsstufe der ersten Pipeline (50) auftreten, den Lesemodus anzeigen, um zu bewirken, daß die Quelldatenregistereinrichtungen (14-21) die dortigen Daten an den Hauptspeicher übergeben, wenn Anforderungsdaten, die in der Ausgangsstufe der ersten Pipeline (50) auftreten, den Vollschreibmodus anzeigen, um zu bewirken, daß die Mischeinrichtungen (23, 26, 19-21) Daten von der Puffereinrichtung (22) und Daten von den Eingangsdatenregistereinrichtungen (24, 25) mischen, wenn Anforderungsdaten, die in der Ausgangsstufe der ersten Pipeline (50) auftreten, den Teilschreibmodus anzeigen, um zu bewirken, daß die zweite Pipeline (51) Anforderungsdaten durch ihre Stufen periodisch verschiebt, wenn Daten von den Mischeinrichtungen gemischt werden, und um zu bewirken, daß die gemischten Daten an den Hauptspeicher übergeben werden, wenn Anforderungsdaten, die in einer Ausgangsstufe der zweiten Pipeline (51) auftreten, den Teilschreibmodus anzeigen.

2. Speicherzugriffscontroller nach Anspruch 1, wobei jede Pipeline, nämlich die erste und die zweite, eine oder mehrere zusätzliche Stufen und Schaltereinrichtungen zum selektiven Koppeln der zusätzlichen Stufen mit der Pipeline aufweist.

3. Speicherzugriffscontroller nach Anspruch 1 oder 2, wobei die Anforderungsdaten einen Quellenbezeichner aufweisen, der die gewählte Anforderungsquelle bezeichnet.

4. Speicherzugriffscontroller nach Anspruch 1, 2 oder 3, wobei die Quelldatenregistereinrichtungen einen Fehlerkorrektur-Codierer aufweisen und die Eingangsdatenregistereinrichtungen einen Fehlerkorrektur-Decodierer aufweisen.

5. Speicherzugriffscontroller nach einem der Ansprüche 1 bis 4, mit:
Wähleinrichtungen (32, 33, 7, 17) zum Durchführen einer Belegt-Prüfung an Speicherstellen des Hauptspeichers, die mit den empfangenen Anforderungsdaten bezeichnet sind, und zum Wählen eines Datenelements der Anforderungsdaten und der diesen zugeordneten Speicherdaten nach Priorität der Anforderungsquellen, wenn die Speicherstellen zugriffsfähig sind;
wobei die erste Pipeline (50) eine Serie von Stufen hat, die mit den Wähleinrichtungen zum periodischen Verschieben von Anforderungsdaten von den Wähleinrichtungen durch die Stufen verbunden sind.

6. Verfahren zum Betreiben eines Multiprozessorsystems mit einem Hauptspeicher und einer ersten Pipeline (50) mit einer Serie von Stufen zum periodischen Verschieben von Anforderungsdaten durch deren Stufen und mit einer zweiten Pipeline (51) mit einer Serie von Stufen zum periodischen Verschieben von Anforderungsdaten durch deren Stufen, wobei das Verfahren die Schritte aufweist:
a) Empfangen von Anforderungsdaten und diesen zugeordneten Speicherdaten von einer gewählten Anforderungsquelle, wobei die Anforderungsdaten einen Zugriffsmodus des Hauptspeichers anzeigen, wobei der Zugriffsmodus einen Lesemodus, einen Vollschreibmodus und einen Teilschreibmodus aufweist;
b) Übergeben der Anforderungsdaten an die erste Pipeline (50) und Zugreifen auf den Hauptspeicher in einem Lesemodus, wenn die Anforderungsdaten den Lesemodus oder den Teilschreibmodus anzeigen, oder Zugreifen auf den Hauptspeicher in einem Schreibmodus, wenn die Anforderungsdaten den Vollschreibmodus anzeigen;
c) Übergeben von Anforderungsdaten von der ersten Pipeline (50) an die zweite Pipeline (51), wenn die Anforderungsdaten in einer Ausgangsstufe der ersten Pipeline den Teilschreibmodus anzeigen, und Zugreifen auf den Hauptspeicher in einem Schreibmodus;
d) Halten der Speicherdaten, wenn die zugeordneten Anforderungsdaten den Teilschreibmodus anzeigen;
e) Prüfen von Anforderungsdaten von allen Stufen der ersten und der zweiten Pipeline;
f) wenn Anforderungsdaten, die in der Ausgangsstufe der ersten Pipeline (50) auftreten, den Lesemodus anzeigen, Übergeben von aus dem Hauptspeicher (30) gelesenen Daten an die gewählte Anforderungsquelle;
g) wenn Anforderungsdaten, die in der Ausgangsstufe der ersten Pipeline (50) auftreten, den Vollschreibmodus anzeigen, Übergeben der im Schritt (a) empfangenen Speicherdaten an den Hauptspeicher (30);
h) wenn Anforderungsdaten, die in der Ausgangsstufe der ersten Pipeline (50) auftreten, den Teilschreibmodus anzeigen, Mischen von aus dem Hauptspeicher gelesenen Daten mit den im Schritt (d) gehaltenen Daten und Bewirken, daß die zweite Pipeline (51) Anforderungsdaten durch deren Stufen periodisch verschiebt; und
i) wenn Anforderungsdaten, die in einer Ausgangsstufe der zweiten Pipeline (51) auftreten, den Teilschreibmodus anzeigen, Übergeben der in der Stufe (h) gemischten Daten an den Hauptspeicher.

7. Verfahren nach Anspruch 6, mit den Schritten:
a) Durchführen einer Belegt-Prüfung an Speicherstellen des Hauptspeichers, die von empfangenen Anforderungsdaten bezeichnet werden, und Wählen eines Datenelements der Anforderungsdaten und der diesen zugeordneten Speicherdaten nach Priorität der Anforderungsquellen, wenn die Speicherstellen zugriffsfähig sind;
b) Halten der im Schritt (a) gewählten Speicherdaten, wenn die zugeordneten Anforderungsdaten den Teilschreibmodus anzeigen;
c) wenn Anforderungsdaten, die in der Ausgangsstufe der ersten Pipeline auftreten, den Vollschreibmodus anzeigen, Übergeben der im Schritt (a) gewählten Daten an den Hauptspeicher;
d) wenn Anforderungsdaten, die in der Ausgangsstufe der ersten Pipeline auftreten, den Teilschreibmodus anzeigen, Mischen von aus dem Hauptspeicher gelesenen Daten mit den im Schritt (b) gehaltenen Daten und Bewirken, daß die zweite Pipeline (51) die Anforderungsdaten durch deren Stufen periodisch verschiebt.

## Revendications

1. Dispositif de commande d'accès à une mémoire pour commander l'accès d'une source de demande ou de sources de demande sélectionnée(s) à une mémoire principale, comprenant :
des moyens (4-8) à registres de données de demande pour recevoir des données de demande de la source de demande sélectionnée, les données de demande indiquant un mode d'accès de la mémoire principale, le mode d'accès comprenant un mode de lecture, un mode d'écriture complète et un mode d'écriture partielle ;
des moyens (14-21) à registres de données pour recevoir des données de stockage associées aux données de demande ;
des moyens (9) à pipelines comprenant un premier pipeline (50) ayant une série d'étages pour décaler périodiquement des données de demande provenant des moyens (4-8) à registres de données de demande d'un étage à l'autre, et un second pipeline (51) ayant une série d'étages connectés à un étage de sortie du premier pipeline si la donnée de demande dudit étage de sortie indique le mode d'écriture partielle ;
des premiers moyens (10) de commande pour recevoir des données de demande d'un étage d'entrée du premier pipeline (50) et accéder à la mémoire principale en mode de lecture si la donnée de demande reçue indique le mode de lecture ou le mode d'écriture partielle, ou accéder à la mémoire en mode d'écriture si la donnée de demande reçue indique le mode d'écriture complète, et pour recevoir des données de demande de l'étage d'entrée du second pipeline (51) et accéder à la mémoire principale en mode d'écriture si la donnée de demande reçue indique le mode d'écriture partielle ;
des moyens (24, 25) à registres de données d'entrée pour recevoir des données lues depuis la mémoire principale ;
des moyens (22) tampons pour maintenir une donnée de stockage associée à la donnée de demande sélectionnée si cette dernière indique le mode d'écriture partielle ;
des moyens (23, 26, 19-21) de fusionnement couplés aux moyens (22) tampons et aux moyens (24, 25) à registres de données d'entrée ; et
des seconds moyens (31) de commande pour examiner les données de demande provenant de tous les étages des premiers et seconds pipelines, ayant pour effet que les moyens (24, 25) à registres de données d'entrée fournissent les données qu'ils contiennent à la source de demande sélectionnée lorsque la donnée de demande apparaissant à l'étage de sortie du premier pipeline (50) indique le mode de lecture, ayant pour effet que les moyens (14-21) à registre de données de source fournissent les données qu'ils contiennent à la mémoire principale lorsque la donnée de demande apparaissant à l'étage de sortie du premier pipeline (50) indique le mode d'écriture complète, ayant pour effet que les moyens (23, 26, 19-21) de fusionnement fusionnent les données provenant des moyens (22) tampons et les données provenant des moyens (24, 25) à registres de données d'entrée lorsque la donnée de demande apparaissant à l'étage de sortie du premier pipeline (50) indique le mode d'écriture partielle, ayant pour effet que le second pipeline (51) décale périodiquement la donnée de demande d'un étage à l'autre de celui-ci lorsque des données sont fusionnées par les moyens de fusionnement, et ayant pour effet que les données fusionnées sont fournies à la mémoire principale lorsque la donnée de demande apparaissant à l'étage de sortie du second pipeline (51) indique le mode d'écriture partielle.

2. Dispositif de commande d'accès à une mémoire selon la revendication 1, dans lequel chacun des premier et second pipelines comporte un ou plusieurs étages supplémentaires et des moyens de commutation pour coupler sélectivement les étages supplémentaires au pipeline.

3. Dispositif de commande d'accès à une mémoire selon la revendication 1 ou 2, dans lequel les données de demande comprennent un identificateur de source identifiant la source de demande sélectionnée.

4. Dispositif de commande d'accès à une mémoire selon la revendication 1, 2 ou 3, dans lequel lesdits moyens à registres de données de source comprennent un codeur de correction d'erreur et lesdits moyens à registres de données d'entrée comprennent un décodeur de correction d'erreur.

5. Dispositif de commande d'accès à une mémoire selon l'une quelconque des revendications 1 à 4, comprenant :
des moyens (32, 33, 7, 17) de sélection pour effectuer un contrôle d'occupation à des emplacements de stockage de la mémoire principale identifiés par les données de demande reçues et sélectionner l'une des données de demande et stocker les données associées à celles-ci en fonction de la priorité des sources de demande si les emplacements de stockage sont accessibles ;
dans lequel le premier pipeline (50) a une série d'étages connectés aux moyens de sélection pour décaler périodiquement les données de demande provenant des moyens de sélection d'un étage à l'autre.

6. Procédé pour faire fonctionner un système multiprocesseur comprenant une mémoire principale et un premier pipeline (50) ayant une série d'étages destinés à décaler périodiquement des données de demande d'un étage à l'autre de celui-ci, et un second pipeline (51) ayant une série d'étages destinés à décaler périodiquement des données de demande d'un étage à l'autre de celui-ci, ledit procédé comprenant les étapes qui consistent :
a) à recevoir la donnée de demande et la donnée de stockage associée à celle-ci d'une source de demande sélectionnée, la donnée de demande indiquant un mode d'accès à la mémoire principale, le mode d'accès incluant un mode de lecture, un mode d'écriture complète et un mode d'écriture partielle ;
b) à appliquer la donnée de demande au premier pipeline (50) et à accéder à la mémoire principale en mode de lecture si la donnée de demande indique le mode de lecture ou le mode d'écriture partielle, ou à accéder à la mémoire principale en mode d'écriture si la donnée de demande indique le mode d'écriture complète ;
c) à appliquer la donnée de demande du premier pipeline (50) au second pipeline (51) si la donnée de demande se trouvant dans un étage de sortie du premier pipeline indique le mode d'écriture partielle et à accéder à la mémoire principale en mode d'écriture ;
d) à maintenir la donnée de stockage si la donnée de demande associée indique le mode d'écriture partielle ;
e) à examiner les données de demande provenant de tous les étages des premier et second pipelines :
f) si la donnée de demande apparaissant à l'étage de sortie du premier pipeline (50) indique le mode de lecture, à fournir la donnée lue depuis la mémoire principale (30) à la source de demande sélectionnée ;
g) si la donnée de demande apparaissant à l'étage de sortie du premier pipeline (50) indique le mode d'écriture complète, à fournir la donnée de stockage reçue par l'étape (a) à la mémoire principale (30) ;
h) si la donnée de demande apparaissant à l'étage de sortie du premier pipeline (50) indique le mode d'écriture partielle, à fusionner les données lues depuis la mémoire principale avec les données maintenues par l'étape (d) et à faire en sorte que le second pipeline (51) décale périodiquement les données de demande d'un étage à l'autre de celui-ci ; et
i) si la donnée de demande apparaissant à un étage de sortie du second pipeline (51) indique le mode d'écriture partielle, à fournir les données fusionnées par l'étape (h) à la mémoire principale.

7. Procédé selon la revendication 6, comprenant les étapes qui consistent :
a) à effectuer un contrôle d'occupation sur des emplacements de stockage de la mémoire principale identifiés par la donnée de demande reçue et à sélectionner l'une des données de demande et la donnée de stockage qui lui est associée en fonction de la priorité des sources de demande si les emplacements de stockage sont accessibles ;
b) à maintenir la donnée de stockage sélectionné par l'étape (a) si la donnée de demande associée indique le mode d'écriture partielle ;
c) si la donnée de demande apparaissant à l'étage de sortie du premier pipeline indique le mode d'écriture complète, à fournir la donnée sélectionnée par l'étape (a) à la mémoire principale ;
d) si la donnée de demande apparaissant à l'etage de sortie du premier pipeline indique le mode d'écriture partielle, à fusionner la donnée lue depuis la mémoire principale avec la donnée maintenue par l'étape (b) et à faire en sorte que le second pipeline (51) décale périodiquement les données de demande d'un étage à l'autre de celui-ci.
